# EUROPÄISCHE PATENTSCHRIFT

(11) **EP 1 350 969 B1**
(45) Veröffentlichungstag und Bekanntmachung des Hinweises auf die Patenterteilung: **27.07.2005**
(21) Anmeldenummer: 03006267.3
(22) Anmeldetag: 21.03.2003
(51) Int. Cl.: F16B 39/282, F16B 35/04

(54) **Befestigungsanordnung**
Fixing assembly
Ensemble de fixation

(30) Priorität: 22.03.2002 DE 20204556 U
(43) Veröffentlichungstag der Anmeldung: 08.10.2003
(73) Patentinhaber: Altenloh, Brinck & Co. GmbH & Co. KG, D-58256 Ennepetal (DE)
(72) Erfinder: Hofschneider, Manfred, 42349 Wuppertal (DE)
(74) Vertreter: Zapf, Christoph, Dipl.-Ing.

(56) Entgegenhaltungen:
- WO-A-01/66964
- DE-U- 29 914 357

## Beschreibung

Die vorliegende Erfindung betrifft eine Befestigungsanordnung, umfassend einerseits ein Befestigungsmittel, das einen Kopf mit einem Kraftangriff für ein Drehwerkzeug und mit einer konisch oder kalottenartig gekrümmten Andruckfläche aufweist, in deren Bereich mehrere über ihren Umfang verteilt angeordnete und ihre eigentliche Flächenkrümmung unterbrechende Kontursprünge (Rücksprünge oder Vorsprünge) gebildet sind, und umfassend andererseits ein mit dem Befestigungsmittel verbindbares Bauteil, das eine konisch oder kalottenartig gekrümmte Anlagefläche für die Andruckfläche des Befestigungsmittels aufweist. Des weiteren betrifft die Erfindung die beiden Bestandteile der genannten Befestigungsanordnung als Einzelteile.

Bei ähnlichen Anordnungen dient die Andruckfläche des Befestigungsmittels - nach Art einer Senkkopfschraube - zum Eingreifen in ein angesenktes bzw. bereichsweise entsprechend konisch oder kalottenartig vertieftes Befestigungsloch des zu befestigenden Bauteils. Beispielsweise ist dies bei Radschrauben zum Befestigen von Rädern bzw. Felgen an einem Kraftfahrzeug der Fall. Bei derartigen Radschrauben besteht das Befestigungsmittel aus einem Gewindeschaft und dem einendig am Gewindeschaft angeordneten Kopf, wobei letzterer am Übergang zu dem Gewindeschaft die konisch oder kalottenartig gekrümmte Andruckfläche aufweist. Dabei besteht das Problem, bei den starken dynamischen Beanspruchungen, denen die Anordnung unterworfen ist, mit möglichst konstruktiv einfachen Mitteln ein hohes Lösemoment des Befestigungsmittels zu sichern, damit dieses sich nicht selbsttätig lösen kann.

Diesem Zweck sowie dem Ausgleich von Fertigungstoleranzen und dem selbsttätigen Zentrieren des Befestigungsmittels dient eine aus dem deutschen Gebrauchsmuster DE 299 14 357 U1 bekannte Befestigungsanordnung der eingangs beschriebenen Art.

Das genannte Problem soll dabei dadurch gelöst werden, daß im Bereich der Andruckfläche des Befestigungsmittels mehrere über den Umfang verteilt angeordnete und die Krümmung der Andruckfläche unterbrechende Konturrücksprünge gebildet sind. Indem durch diese Konturrücksprünge die verbleibende Oberfläche der Andruckfläche verkleinert wird, wird bei Anziehen des Befestigungsmittels bei gleichem Drehmoment eine erhöhte Flächenpressung erreicht, was sich auch in einer Erhöhung des Lösemomentes auswirkt. Verursacht wird dies dadurch, daß durch die Konturrücksprünge eine geringfügige Verformung im Bereich der Andruckfläche auftritt, und zwar insbesondere jeweils im Grenzbereich zu den Konturrücksprüngen. Auf diese Weise können auch Fertigungstoleranzen (Form- und/oder Lagetoleranzen) in einem bestimmten Umfang ausgeglichen werden, indem sich praktisch die Andruckfläche und der zur Anlage gelangende Lochbereich des jeweils zu befestigenden Teils beim Festziehen aneinander anpassen. Entsprechendes gilt auch bezüglich der Wirkung zur Zentrierung zwischen dem Befestigungsmittel und dem zugehörigen Loch. Dabei ist die Anzahl der Konturrücksprünge sowie deren Flächen- und Verlaufsform (Breite, Länge, Tiefe) zur Anpassung an die jeweilige spezielle Verwendung des erfindungsgemäßen Befestigungsmittels in weitem Umfang variabel.

Außerdem ist zur Verbesserung des Reibungsverhaltens des Befestigungsmittels der bekannten Anordnung vorgesehen, im Bereich der Umfangsfläche oder im Bereich der Konturrücksprünge mindestens eine Erhebung, vorzugsweise mehrere Erhebungen, anzuordnen. Die Höhe der Erhebung kann dabei insbesondere derart gewählt werden, daß die Erhebung zu Beginn, in einem mittleren Verlaufsabschnitt, und/oder zum Ende eines Eindrehvorganges eine elastische und/oder plastische Deformation der Erhebung selbst und/oder des Teils bewirkt, mit dem die Verschraubung erfolgt.

Die bekannte Anordnung hat sich in der Praxis zwar vom Grundsatz her bewährt, jedoch traten insofern teilweise Mängel auf, als beim Vorliegen einer ausschließlich elastischen Verformung am Befestigungsmittel und/oder Bauteil unter bestimmten Umständen der angestrebte hohe Widerstand gegen selbsttätiges Lösen nicht erreicht wurde.

Der Erfindung liegt die Aufgabe zugrunde, eine Befestigungsanordnung der eingangs genannten Art (als Ganzes und in ihren beiden einzelnen Hauptbestanteilen) auf konstruktiv einfache und wirtschaftliche Weise hinsichtlich der Erhöhung des Lösemomentes zu verbessern.

Erfindungsgemäß wird dies dadurch erreicht, daß im Bereich der Anlagefläche mehrere über ihren Umfang verteilt angeordnete und ihre eigentliche Flächenkrümmung unterbrechende Gegenkontursprünge (Vorsprünge oder Rücksprünge) gebildet sind, die im verbundenen Zustand von Befestigungsmittel und Bauteil formschlüssig in die Kontursprünge (Rücksprünge oder Vorsprünge) der Andruckfläche eingreifen, wobei die Andruckfläche mit den Kontursprüngen und die Anlagefläche mit den Gegenkontursprüngen derart dimensioniert sind, daß beim Verbinden von Befestigungsmittel und Bauteil keine bleibenden, makroskopischen Formänderungen auftreten.

Die Formänderungen sind somit im Gegensatz zu der bekannten Anordnung, die sowohl elastische als auch plastische Verformungen vorsieht, rein elastisch, wodurch das Auftreten von Materialschäden wirksam unterbunden werden kann, wobei aber der Formschluß zwischen den komplementär ausgebildeten Flächen ein hohes Lösemoment, insbesondere einen ausreichenden Widerstand gegen selbsttätiges Lösen, sichert.

Die WO 01/66964 A1 beschreibt eine Unterlegscheibe ("washer") mit einer Anlagefläche, die der Andruckfläche des Befestigungsmittels entsprechende Kontursprünge aufweist.

In bevorzugten Ausführungsformen dabei kann zur Verbesserung des Reibungsverhaltens für die Erfindung vorgesehen sein, daß im Bereich der Andruckfläche oder im Bereich der Konturrücksprünge - wie aus dem deutschen Gebrauchsmuster DE 299 14 357 U1 bekannt - Erhebungen - oder auch Vertiefungen - angeordnet sind, wobei aber im Bereich der Anlagefläche oder im Bereich der Konturvorsprünge wiederum komplementäre Vertiefungen- oder auch Erhebungen - angeordnet sind, so daß die Erhebungen im verbundenen Zustand von Befestigungsmittel und Bauteil formschlüssig in die Vertiefungen eingreifen, und wobei die Erhebungen und Vertiefungen derart dimensioniert sind, daß beim Verbinden von Befestigungsmittel und Bauteil keine bleibenden Formänderungen auftreten.

Eine maximale jeweilige Abmessung (Tiefe oder Höhe) der Kontursprünge gegenüber der Andruckfläche und eine maximale jeweilige Gegenabmessung (Höhe oder Tiefe) der Gegenkontursprünge gegenüber der Anlagefläche sowie die jeweilige Höhe gegebenenfalls vorhandener Erhebungen und die jeweilige Tiefe gegebenenfalls vorhandener Vertiefungen können dabei mit Vorteil zumindest unter Beachtung der jeweiligen, aus dem Druckversuch nach DIN 50 106 gewonnenen Quetschgrenzen R_{dF} der Werkstoffe des Befestigungsmittels und des Bauteils, vorzugsweise aber unter Beachtung der jeweiligen 0,2%-Stauchgrenze R_{d0,2}, dimensioniert sein.

Ein erfindungsgemäßes Bauteil, wie eine Radfelge oder Zwischenscheibe, ist somit einer Befestigungsanordnung zugeordnet, die einerseits ein Befestigungsmittel umfaßt, das einen Kopf mit einem Kraftangriff für ein Drehwerkzeug und mit einer konisch oder kalottenartig gekrümmten Andruckfläche aufweist, in deren Bereich mehrere über ihren Umfang verteilt angeordnete und ihre eigentliche Flächenkrümmung unterbrechende Kontursprünge (Konturrücksprünge oder Konturvorsprünge) gebildet sind, und die andererseits das mit dem Befestigungsmittel verbindbare Bauteil umfaßt, das eine konisch oder kalottenartig gekrümmte Anlagefläche für die Andruckfläche des Befestigungsmittels aufweist, wobei im Bereich der Anlagefläche mehrere über ihren Umfang verteilt angeordnete und ihre eigentliche Flächenkrümmung unterbrechende Gegenkontursprünge (Konturvorsprünge oder Konturrücksprünge) gebildet sind, die dazu bestimmt sind, im verbundenen Zustand von Befestigungsmittel und Bauteil formschlüssig in die Kontursprünge der Andruckfläche einzugreifen, wobei die Andruckfläche mit den Kontursprüngen und die Anlagefläche mit den GegenKontursprüngen derart dimensioniert sind, daß beim Verbinden von Befestigungsmittel und Bauteil keine bleibenden Formänderungen auftreten, und wobei die Anlagefläche des Bauteils komplemetär zur Andruckfläche des Befestigungsmittels ausgebildet ist, wobei Formänderungen gemeint sind entsprechend der makroskopischen Kontur der Kontursprünge.

Weitere vorteilhafte Ausgestaltungsmerkmale der Erfindung sind in den Unteransprüchen und der anschließenden detaillierten Beschreibung enthalten.

Anhand von bevorzugten, in der Zeichnung veranschaulichten Ausführungsbeispielen wird die Erfindung nun genauer erläutert. Dabei zeigen:
- Fig. 1: in Perspektivansicht, ein Befestigungsmittel einer ersten Ausführungsform einer erfindungsgemäßen Befestigungsanordnung,
- Fig. 2: eine gegenüber Fig. 1 vergrößerte Unteransicht auf das in Fig. 1 dargestellte Befestigungsmittel,
- Fig. 3: eine gegenüber Fig. 1 vergrößerte Seitenansicht des in Fig. 1 dargestellten Befestigungsmittels,
- Fig. 4: in Fig. 1 entsprechender Darstellung ein mit dem Befestigungsmittel zu verbindendes Bauteil der ersten Ausführungsform einer erfindungsgemäßen Befestigungsanordnung,
- Fig. 5: eine gegenüber Fig. 4 vergrößerte Schnittdarstellung des in Fig. 4 dargestellten Bauteils,
- Fig. 6: eine gegenüber Fig. 4 vergrößerte Draufsicht auf das in Fig. 4 dargestellte Bauteil,
- Fig. 7: in Perspektivansicht, ein Befestigungsmittel einer zweiten Ausführungsform einer erfindungsgemäßen Befestigungsanordnung,
- Fig. 8: eine Unteransicht auf das in Fig. 7 dargestellte Befestigungsmittel,
- Fig. 9: eine Seitenansicht des in Fig. 7 dargestellten Befestigungsmittels,
- Fig. 10: in Fig. 7 entsprechender Darstellung ein mit dem Befestigungsmittel zu verbindendes Bauteil der zweiten Ausführungsform einer erfindungsgemäßen Befestigungsanordnung,
- Fig. 11: eine Schnittdarstellung des in Fig. 10 dargestellten Bauteils,
- Fig. 12: eine Draufsicht auf das in Fig. 10 dargestellte Bauteil,
- Fig. 13: in Perspektivansicht, ein Befestigungsmittel einer dritten Ausführungsform einer erfindungsgemäßen Befestigungsanordnung,
- Fig. 14: eine gegenüber Fig. 13 vergrößerte Unteransicht auf das in Fig. 13 dargestellte Befestigungsmittel,
- Fig. 15: eine gegenüber Fig. 13 vergrößerte Seitenansicht des in Fig. 13 dargestellten Befestigungsmittels,
- Fig. 16: in Fig. 13 entsprechender Darstellung ein mit dem Befestigungsmittel zu verbindendes Bauteil der dritten Ausführungsform einer erfindungsgemäßen Befestigungsanordnung,
- Fig. 17: eine gegenüber Fig. 16 vergrößerte Schnittdarstellung des in Fig. 15 dargestellten Bauteils,
- Fig. 18: eine gegenüber Fig. 16 vergrößerte Draufsicht auf das in Fig. 4 dargestellte Bauteil,
- Fig. 19: in Perspektivansicht, ein Befestigungsmittel einer vierten Ausführungsform einer erfindungsgemäßen Befestigungsanordnung,
- Fig. 20: eine gegenüber Fig. 19 vergrößerte Unteransicht auf das in Fig. 19 dargestellte Befestigungsmittel,
- Fig. 21: eine gegenüber Fig. 19 vergrößerte Seitenansicht des in Fig. 13 dargestellten Befestigungsmittels,
- Fig. 22: in Fig. 19 entsprechender Darstellung ein mit dem Befestigungsmittel zu verbindendes Bauteil der vierten Ausführungsform einer erfindungsgemäßen Befestigungsanordnung,
- Fig. 23: eine gegenüber Fig. 22 vergrößerte Schnittdarstellung des in Fig. 22 dargestellten Bauteils,
- Fig. 24: eine gegenüber Fig. 22 vergrößerte Draufsicht auf das in Fig. 22 dargestellte Bauteil,
- Fig. 25: eine Seitenansicht eines Befestigungsmittels einer fünften Ausführungsform der erfindungsgemäßen Befestigungsanordnung, in Analogie zu Fig. 1, 7, 13 und 19,
- Fig. 26: eine noch stärker vergrößerte axiale Schnittansicht in Pfeilrichtung XI gemäß Fig. 25,
- Fig. 27: eine stark vergrößerte axiale Schnittdarstellung eines Befestigungsmittels einer sechsten Ausführungsform (obere Hälfte der Figur) und einer siebenten Ausführungsform (untere Hälfte der Figur) der erfindungsgemäßen Befestigungsanordnung,
- Fig. 28: ein noch stärker vergrößertes Detail aus Fig. 27,
- Fig. 29: ein Detail einer axialen Schnittdarstellung eines Befestigungsmittels einer achten Ausführungsform der erfindungsgemäßen Befestigungsanordnung, analog zu Fig. 28,
- Fig. 30: eine Seitenansicht eines Befestigungsmittels einer neunten Ausführungsform der erfindungsgemäßen Befestigungsanordnung.

In den Figuren sind gleiche Teile mit jeweils denselben Bezugsziffem versehen, so daß sie in der Regel nachfolgend nur einmal beschrieben werden.

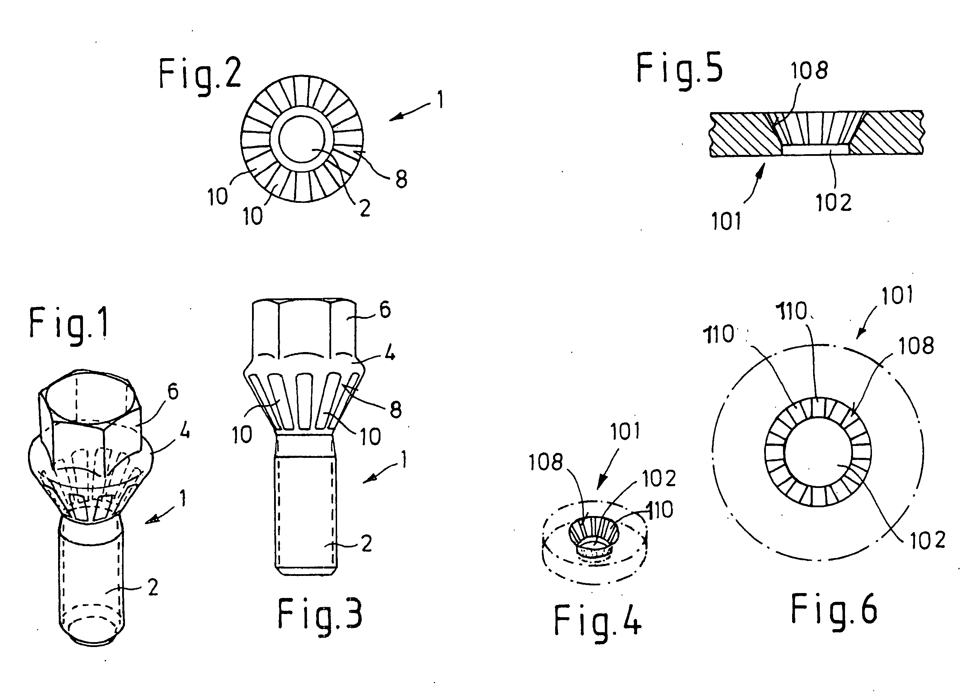

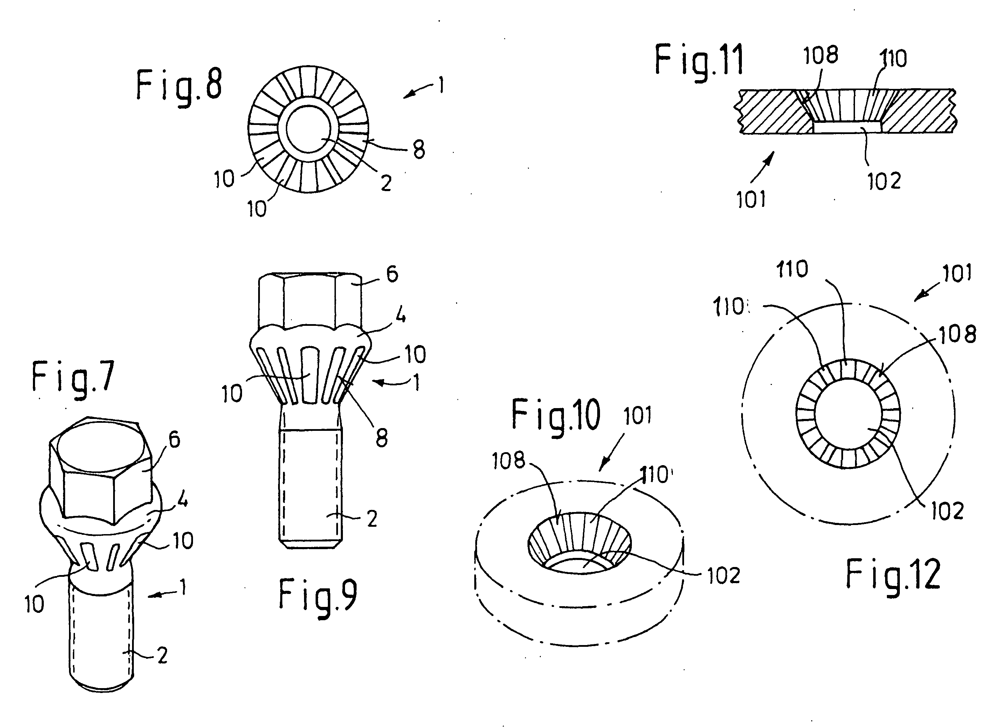

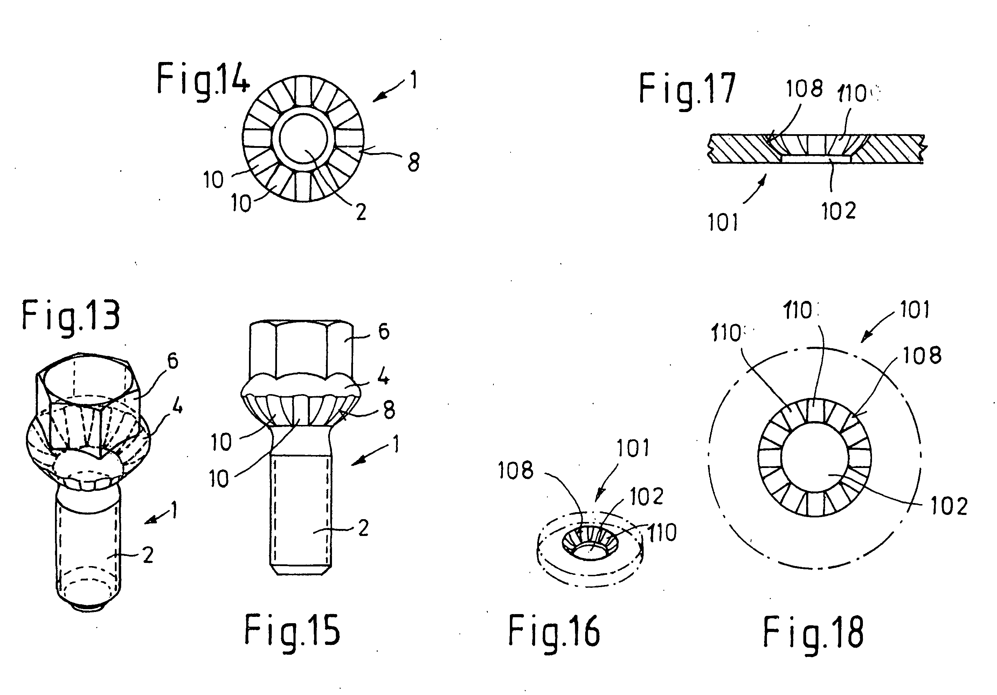

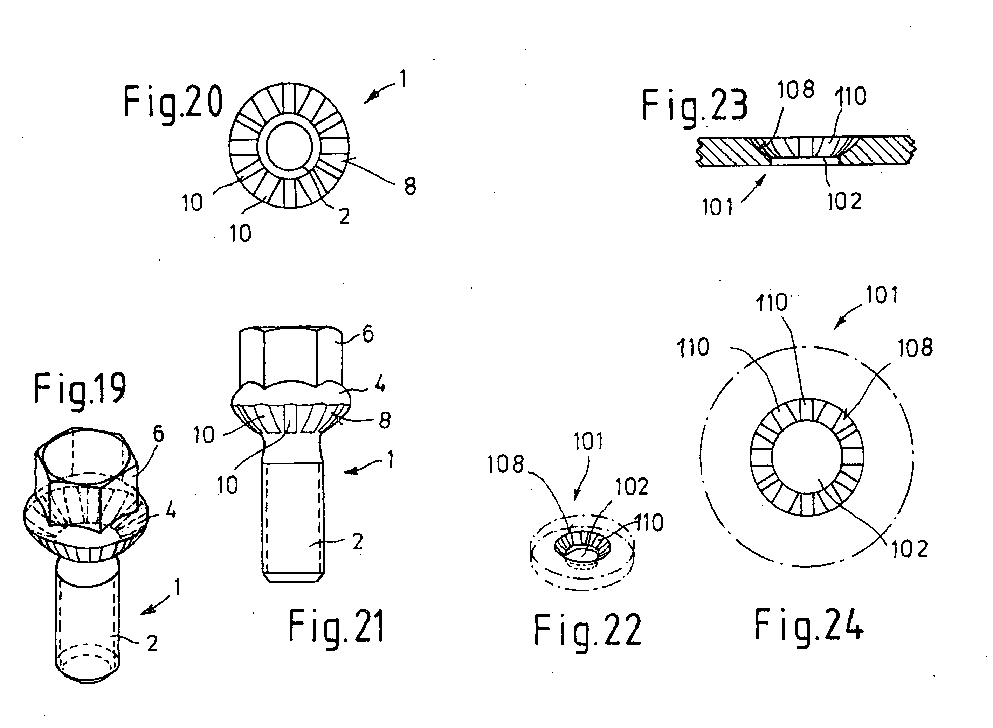

Wie zunächst jeweils Fig. 1 und 3 für die erste Ausführung, Fig. 7 und 9 für die zweite Ausführung, Fig. 13 und 15 für die dritte Ausführung sowie Fig. 19 und 21 für die vierte Ausführung der Erfindung zeigen, umfaßt eine erfindungsgemäße Befestigungsanordnung ein Befestigungsmittel 1, das einen Gewindeschaft 2 aufweist, der an einem Ende in einen Kopf 4 übergeht. Der Kopf 4 weist einen Kraftangriff 6 für ein Drehwerkzeug auf. In den dargestellten Ausführungsbeispielen ist der Kraftangriff 6 jeweils als Außensechskant ausgebildet, es ist aber auch jede andere Ausführung möglich, beispielsweise ein Innensechskant oder dergleichen.

Der Kopf 4 weist eine sich in Richtung des Gewindeschaftes 2 verjüngende Andruckfläche 8 auf. In der ersten und zweiten Ausführung (Fig. 1 bis 6, Fig. 7 bis 12) ist diese Andruckfläche 8 konisch bzw. kegelförmig ausgebildet. Bei der dritten und vierten Ausführung (Fig. 13 bis 18, Fig. 19 bis 24) handelt es sich um eine kalottenartig gekrümmte Andruckfläche 8. Die Andruckfläche 8 greift in einen entsprechend vertieften, z. B. versenkten Abschnitt eines Befestigungsloches 102 eines für die ersten vier Ausführungen der erfindungsgemäßen Befestigungsanordnung jeweils in den Fig. 4 bis 6, 10 bis 12, 16 bis 18 und 22 bis 24 dargestellten, zu befestigenden bzw. mit dem Befestigungsmittel 1 zu verbindenden Bauteils 101 ein. Das Bauteil 101 weist eine konisch (erste und zweite Ausführung) oder kalottenartig gekrümmte (dritte und vierte Ausführung) Anlagefläche 108 für die Andruckfläche 8 des Befestigungsmittels 1 auf.

Im Bereich der Andruckfläche 8 des Befestigungsmittels 1 sind mehrere, d. h. insbesondere mindestens drei, über ihren Umfang verteilt angeordnete und ihre eigentliche Flächenkrümmung unterbrechende Konturrücksprünge gebildet. In den ersten vier Ausführungsbeispielen handelt es sich dabei um Abflachungen 10, wobei jeweils zwölf dieser Abflachungen 10 vorgesehen sind. Die Konturrücksprünge bewirken auf konstruktiv einfache Weise eine Erhöhung des Lösemomentes des erfindungsgemäßen Befestigungsmittels 1.

In den dargestellten Ausführungen verlaufen die Abflachungen 10, streifenförmig mit im wesentlichen konstanter Breite und im wesentlichen geradlinig in Richtung der Längsachse des Gewindeschaftes 2 über die Andruckfläche 8 hinweg.

Jede Abflachung 10 kann im wesentlichen eben ausgebildet sein. Es kann sich auch um eine schwache Krümmung, z.B. mit einem Krümmungsradius handeln, der größer als der entsprechende Krümmungsradius der Andruckfläche 8 ist. Auf diese Weise wird jedenfalls eine Reduzierung der beim Festziehen wirksamen Andruckfläche 8 erreicht.

Komplementär zu den Konturrücksprüngen im Bereich der Andruckfläche 8 des Befestigungsmittels 1 sind im Bereich der Anlagefläche 108 des Bauteils 101 mehrere, d. h. insbesondere mindestens drei, in den Ausführungsbeispielen 12, über ihren Umfang verteilt angeordnete und ihre eigentliche Flächenkrümmung unterbrechende Konturvorsprünge gebildet, die im verbundenen Zustand von Befestigungsmittel 1 und Bauteil 101 formschlüssig in die Konturrücksprünge der Andruckfläche 8 eingreifen. Dies ist jedoch immer nur in bestimmten bei bestimmten Verdreh-Winkelstellungen des Befestigungsmittels 1 gegenüber dem Bauteil 101 möglich, wobei die mögliche Anzahl von derartigen Winkelstellungen durch die Anzahl der Konturrücksprünge und Konturvorsprünge bestimmt wird.

Bei den Konturvorsprüngen kann es sich um Aufwölbungen auf der Anlagefläche 108 oder - wie dargestellt - um Querschnittseinengungen 110 des Befestigungsloches 102 handeln, wobei in Entsprechung zu einer ebenen Abflachung 10 der Andruckfläche 8 die korrespondierende Querschnittseinengung 110 des Befestigungsloches 102 im wesentlichen eben oder in Entsprechung zu einer gekrümmten Abflachung 10 der Andruckfläche 8 die korrespondierende Aufwölbung auf der Anlagefläche 108 schwach gekrümmt mit einem Krümmungsradius ausgebildet ist, der größer als der entsprechende Krümmungsradius der Anlagefläche 108 ist.

Die Andruckfläche 8 mit den Konturrücksprüngen 10 und die Anlagefläche 108 mit den Konturvorsprüngen sind dabei derart dimensioniert, daß beim Verbinden von Befestigungsmittel 1 und Bauteil 101 keine bleibenden Formänderungen, sondern nur elastische Verformungen auftreten.

Eine maximale jeweilige Tiefe der Konturrücksprünge gegenüber der Andruckfläche 8 und eine jeweilige maximale Höhe der Konturvorsprünge gegenüber der Anlagefläche 108 können zumindest unter Beachtung der jeweiligen, aus dem Druckversuch nach DIN 50 106 gewonnenen Quetschgrenzen R_{dF} der Werkstoffe des Befestigungsmittels 1 und des Bauteils 101, vorzugsweise aber unter Beachtung der jeweiligen 0,2%-Stauchgrenze R_{d0,2}, dimensioniert sein. Dabei sollte hinsichtlich dieser Kenngrößen der Werkstoffe von Befestigungsmittel 1 und Bauteil 101 der jeweils kleinere Wert der Berechnung zugrundegelegt werden, so daß weder bei dem höherfesten Werkstoff (z.B., wie oben erwähnt, mit einer Zugfestigkeit in der Größenordnung von etwa 1000 N/mm²), noch bei dem Werkstoff geringerer Festigkeit (z.B. einer Aluminiumfelge) plastische Verformungen auftreten.

Das zweite Ausführungsbeispiel und das vierte Ausführungsbeispiel der Erfindung zeichnen sich jeweils gegenüber der ersten bzw. der dritten Ausführungsform dadurch aus, daß die streifenförmigen Konturrücksprünge (Abflachungen 10) in der Andruckfläche 8 des Befestigungsmittels 1 und die streifenförmigen Konturvorsprünge (Querschnittseinengungen 10) in der Anlagefläche 108 des Bauteils 101 nicht nur in einer Breite, sondern in zwei verschiedenen Breiten ausgeführt sind. Die (nicht näher bezeichneten) unterschiedlichen Breiten, wie insbesondere Fig. 8 und 12 sowie 20 und 24, können in Umfangsrichtung jeweils alternieren.

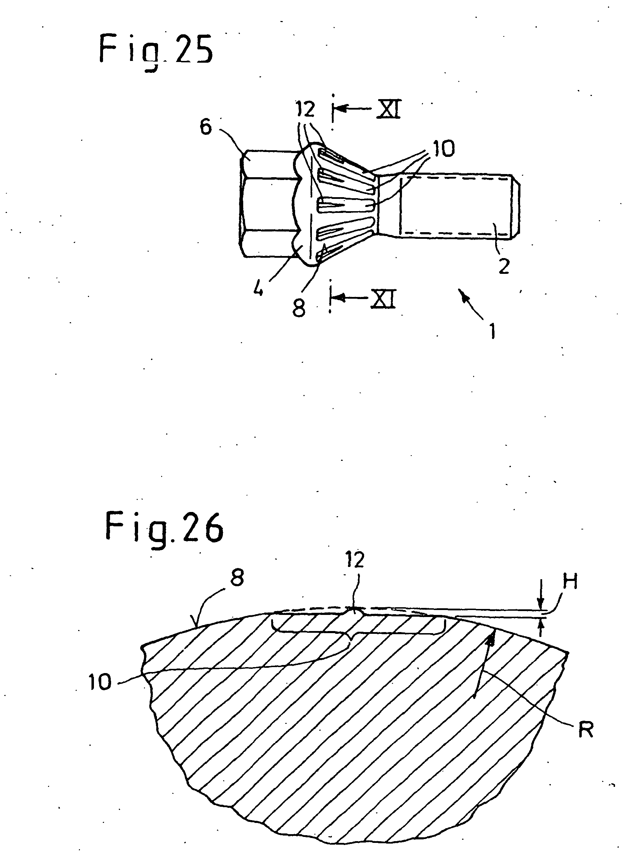

Das folgende Ausführungsbeispiel (Fig. 25 und 26) der Erfindung zeichnet sich gegenüber den ersten vier Ausführungsformen dadurch aus, im Bereich der Konturrücksprünge (Abflachungen 10) des Befestigungselementes 1 mindestens eine Erhebung 12, vorzugsweise mehrere Erhebungen 12, angeordnet ist bzw. sind. Diese Erhebungen 12 dienen zur Optimierung des Reibungsverhaltens (Erhöhung des Reibmomentes) des erfindungsgemäßen Befestigungsmittels, so daß zusätzlich das Lösemoment heraufgesetzt wird. Entsprechend ist/sind im Bereich der Konturvorsprünge (Querschnittseinengungen 110) des (nicht dargestellten) Bauteiles 101 mindestens eine Vertiefung, vorzugsweise mehrere Vertiefungen, angeordnet wobei die Erhebungen 12 im verbundenen Zustand von Befestigungsmittel 1 und Bauteil 101 formschlüssig in die Vertiefungen eingreifen, und die Erhebungen 12 und Vertiefungen derart dimensioniert sind, daß beim Verbinden von Befestigungsmittel 1 und Bauteil 101 keine bleibenden Formänderungen auftreten. Die Erhebungen 12 und Vertiefungen tragen somit ebenfalls dazu bei, die erfindungsgemäße Befestigungsanordnung einerseits hinsichtlich der Erhöhung des Lösemomentes und andererseits hinsichtlich der Erhöhung der Lebensdauer ihrer Bestandteile zu verbessern.

Wie Fig. 26 veranschaulicht, können die Erhebungen 12 im Hautrelief (und die Vertiefungen im Basrelief) jeweils etwa halbkugelförmig oder als Kugelkappe ausgebildet sein oder zumindest einen halbkreisförmigen oder kreisabschnittförmigen Querschnitt aufweisen.

Ersteres gilt insbesondere für den Fall, daß es sich bei den Erhebungen 12 bzw. Vertiefungen um eine Anzahl mehrerer linienförmig hintereinander - nach der Art einer Perlenschnur - angeordneter diskreter ("punktförmiger") Teilerhebungen bzw. Vertiefungen handelt, während Zweites für die in Fig. 25 dargestellte Ausführungsform gilt, bei der die Erhebungen 12 jeweils nicht als Teilerhebungen sondern als Rippen ausgebildet sind, die dem Grundverlauf (Längsverlauf) der Konturrücksprünge (Abflachungen 10) des Befestigungsmittels 1 folgen, während die Vertiefungen jeweils als Nut ausgebildet sind, die dem Grundverlauf der Konturvorsprünge am Bauteil 101 folgen.

Wie aus Fig. 25 weiter ersichtlich ist, erstrecken sich die Erhebungen 12 (und Vertiefungen) in der fünften Ausführungsform der Erfindung vorteilhafterweise nur über eine Teillänge der Konturrücksprünge (und Konturvorsprünge), insbesondere über deren auf der Seite des Kopfes 4 liegende Hälfte. Sie könnten sich aber auch über deren auf der Seite des Schaftes 2 liegende Hälfte oder über die gesamte Länge erstrecken. Das Wirksamwerden der Erhebungen 12 und (Vertiefungen) kann dadurch bedarfsweise auf bestimmte Abschnitte des Eindrehvorgangs des Befestigungsmittels 1 in das Bauteil oder auf den gesamten Eindrehvorgang eingestellt werden.

Hinsichtlich einer Höhe H (Fig. 26), die die Erhebungen 1,2 bzw. einer korrespondierenden Tiefe, die die Vertiefungen aufweisen, ist festzustellen, daß die Erhebungen 12 insbesondere tribologisch erst dann wirksam werden, wenn sie den Krümmungsradius R der Andruckfläche 8 tangieren oder überragen. Diese technische Forderung sollte daher zumindest bereichsweise für die Erhebungen 12 erfüllt sein. Fig. 26 veranschaulicht diesbezüglich, wie die Andruckfläche 8 im Bereich der Abflachung 10 - als Strichlinie gezeichnet - verlaufen würde, wobei die Höhe H der Erhebung 12 derart bemessen ist, daß die Erhebung 12 an ihrer Spitze die gestrichelte Hüllkurve der Andruckfläche 8 nur in einem Punkt berührt, d.h. tangiert. Die Höhe H der Erhebungen 12 bestimmt, bei welcher Vorspannkraft bzw. bei welchem Eindrehmoment ein Eingriff bzw. eine Anlage der Erhebung 12 an dem zu befestigenden Teil erfolgt. Durch eine mögliche Deformation der Andruckfläche 8 beim Wirksamwerden einer entsprechend großen Vorspannkraft bzw. einem entsprechend großen Eindrehmoment ist dabei auch eine Anlage der Erhebung 12 an dem zu befestigenden Teil möglich, wenn die Höhe H der Erhebung 12 derart bemessen ist, daß die Erhebung 12 die gestrichelte Hüllkurve der Andruckfläche 8 im unbelasteten Zustand des Befestigungsmittels nicht berührt.

Des weiteren kann vorteilhafterweise auch vorgesehen sein, daß die Erhebungen 12 und die Vertiefungen über ihren jeweiligen Längsverlauf eine veränderliche Höhe H bzw. Tiefe aufweisen. So könnte die Erhebung 12 jeweils eine derartige Höhe H aufweisen, daß die Erhebung 12 in einem Bereich ihres Längsverlaufs vollständig innerhalb des Krümmungsradius R der Andruckfläche 8 (bzw. unterhalb der erwähnten Hüllkurve) liegt und dann derartig ansteigt, daß sie in einem zweiten Bereich ihres Längsverlaufs (beispielsweise in der Schnittebene von Fig. 11) vollständig den Krümmungsradius R der Andruckfläche 8 überragt. In komplementärer Weise gilt dies dann für die Vertiefung in Relation zum Krümmungsradius der Anlagefläche.

Die Höhe H der Erhebungen 12 bzw. Tiefe der Vertiefungen kann dabei aber immer derart gewählt werden, daß die Erhebung 12 zu Beginn, in einem mittleren Verlaufsabschnitt, und/oder zum Ende eines Eindrehvorganges des Befestigungsmittels 1 eine ausschließlich elastische Deformation der Erhebung 12 selbst und/oder des Bauteils 101 bewirkt, mit dem die Verschraubung erfolgt.

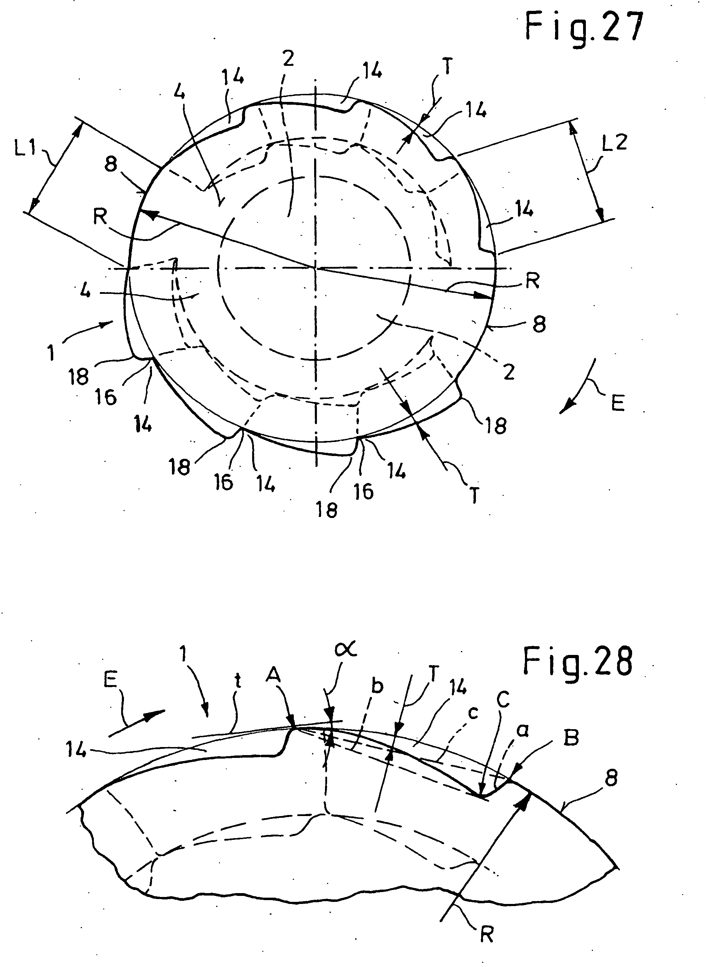

Die Fig. 27 bis 29 veranschaulichen weitere Ausführungsformen der Erfindung. Diesen ist gemeinsam, daß die Konturrücksprünge des Befestigungsmittels 1 durch Ausnehmungen 14 gebildet sind, die eine in Eindrehrichtung E zunehmende Tiefe T aufweisen. Dadurch erhöht sich mit zunehmendem Eindrehmoment die Effizienz der Konturrücksprünge. Entsprechend sind am (nicht dargestellten) Bauteil 101 die Konturvorsprünge durch Erhöhungen gebildet, die eine in Eindrehrichtung (E) zunehmende Höhe aufweisen.

Insbesondere können die Ausnehmungen 14 des Befestigungsmittels 1 eine Grundkontur aufweisen, die im Querschnitt etwa die Form eines Dreiecks, vorzugsweise eines ungleichseitigen Dreiecks besitzt, dessen große Kathete b in Eindrehrichtung E radial nach innen verläuft, und dessen kleine Kathete a quer zur Eindrehrichtung E verläuft. Ein solches Dreieck (mit der Hypotenuse c) ist exemplarisch in Fig. 28 durch seine Eckpunkte A, B, C festgelegt und wird nachfolgend noch genauer erläutert.

In den dargestellten Ausführungen verlaufen auch die Ausnehmungen 14 und Erhöhungen (wie die Abflachungen 10 und Querschnittseinengungen) streifenförmig und im wesentlichen geradlinig in Richtung der Längsachse des Gewindeschaftes 2 über die Andruckfläche 8 bzw. über die Anlagefläche 108 hinweg.

Die verschiedenen Kanten - z.B. Kante kleine Kathete a gegen große Kathete b oder Kante Ausnehmung 14 gegen Andruckfläche 8 - der Konturrücksprünge (in diesem Fall der Ausnehmungen 14) können entweder spitz ausgebildet sein oder auch Abrundungen aufweisen, wie dies Fig. 27 und 28 deutlich zu entnehmen ist. Die abgerundeten Kanten gewährleisten dabei eine schonende Behandlung der Bauteile.

In der in der oberen Hälfte von Fig. 27 und in Fig. 28 gezeigten sechsten Ausführungsform der Erfindung ist die große Kathete b (Fig. 28) der in der Grundform dreieckigen Ausnehmung 14 im wesentlichen eben ausgebildet. Zwischen den Bereichen der Andruckfläche 8, deren Breite mit L1 bezeichnet ist, liegen die Bereiche der Ausnehmungen 14, die im wesentlichen über die Länge der Ausnehmungen 14 eine konstante Breite aufweisen, die mit L2 bezeichnet ist. Durch eine Variation eines mittleren Größenverhältnisses der beiden Breiten L1, L2 ist vorteilhafterweise eine Anpassung des erfindungsgemäßen Befestigungsmittels 1 an unterschiedliche zu befestigende Teile, beispielsweise Räder bzw. Felgen unterschiedlicher Kraftfahrzeugtypen, möglich. Beispielsweise kommen, wie dargestellt ist, auf einen Bereich der Andruckfläche 8 mit einer mittleren Breite L1 vier unmittelbar aufeinanderfolgend angeordnete Ausnehmungen 14 mit der Breite L2. Im Bereich der Ausnehmungen ergibt somit auch eine vorteilhafte, etwa sägezahnartige Kontur im Übergangsbereich vom Kopf 4 (Der Kraftangriff 6 ist nicht dargestellt.) zum Gewindeschaft 2 hin. Die kleinen Katheten a bilden dabei beim Lösen wirksamwerdende Endflächen, die das Lösemoment erhöhen, während die großen Katheten b ein leichtes Eindrehen gewährleisten.

In der siebenten Ausführungsform der Erfindung (unterer Teil von Fig. 27) liegt ein Fußpunkt 16 der Konturrücksprünge 14 etwa auf dem Niveau des Radius R der Andruckfläche 8, so daß diese in ihrer Andruckfunktion - zumindest zu Anfang eines Einschraubvorgangs - kaum noch zum Tragen kommt. Die Andruckfunktion wird in diesem Fall von Kopfpunkten 18 einer - in Analogie zur sechsten Ausführungsform - etwa sägezahnartigen Kontur im Übergangsbereich vom Kopf 4 zum Gewindeschaft 2 übernommen. Diese Kontur kann sich dann beim Einschrauben unter Erhöhung des Lösemomentes für das erfindungsgemäße Befestigungsmittel 1 verformen, wobei die Dimensionierung erfindungsgemäß derart ausgeführt wird, daß nur elastische Deformationen (im Bereich der sog. Hookeschen Gerade des Spannungs-Stauchungs-Diagramms) auftreten, wobei hierunter erfindungsgemäß - wie oben ausgeführt ist - insbesondere Deformationen bis zur 0,2%-Stauchgrenze mitverstanden werden. Durch die Deformation wird bei Erreichen eines bestimmten, durch die Tiefe T der Ausnehmungen festgelegten Grenzdrehmomentes die Andruckfunktion der Andruckfläche 8 wieder wirksam.

Fig. 28 zeigt, wie bereits erwähnt, ein noch stärker vergrößertes Detail aus Fig. 27, und zwar aus dem oberen Teil der Zeichnung (sechste Ausführungsform). Hieran wird deutlich, daß die Ausnehmungen 14 vorteilhafterweise eine Grundkontur aufweisen können, die im Querschnitt etwa die Form eines ungleichseitigen Dreiecks ABC besitzt. (Die Dreieckseiten a, b, c sind gestrichelt gezeichnet.) Die große Kathete b des Dreiecks ABC verläuft in Eindrehrichtung E radial nach innen, vorzugsweise in einem Winkel α von bis zu etwa 30° zu einer Tangente t an die Andruckfläche 8. Die kleine Kathete a verläuft quer zur Eindrehrichtung E.

Insbesondere die große Kathete b ist dabei schwach gekrümmt ausgebildet. Auch die verschiedenen Kanten sind - wie bereits oben erwähnt - im Sinne einer schonenden Materialbehandlung und damit langen Lebensdauer verrundet.

Die große Kathete b kann dabei mit Vorteil zur kleinen Kathete a in einem Längenverhältnis von etwa 3 : 1 bis zu etwa 8 : 1 stehen (in der Ausführung konkret etwa 6 : 1). Durch diese Dimensionierung, wie auch durch die o.g. Dimensionierung des Winkels α zwischen großer Kathete b und Tangente t, ergibt sich ein optimal flacher Verlauf der großen Kathete b für das Eindrehen und eine optimal steiler Verlauf der kleinen Kathete a zur Erhöhung des Lösemomentes.

Wie ein Vergleich des unteren Teils von Fig. 27 mit Fig. 28 zeigt, entsprechen die Fußpunkte 16 der siebenten Ausführung den Dreieckspunkten C der sechsten Ausführung und die Kopfpunkte 18 den Dreieckspunkten A bzw. B.

Auch bei den beiden vorstehend beschriebenen Ausführungen und bei der nachfolgenden achten Ausführung ist die Innenkontur des (nicht dargestellten) Bauteils 101 entsprechend komplementär zur Außenkontur des Befestigungsmittels ausgebildet, wodurch im verbundenen Zustand von Befestigungsmittel 1 und Bauteil 101 der angestrebte, bereits mehrfach erwähnte Formschluß erreicht wird.

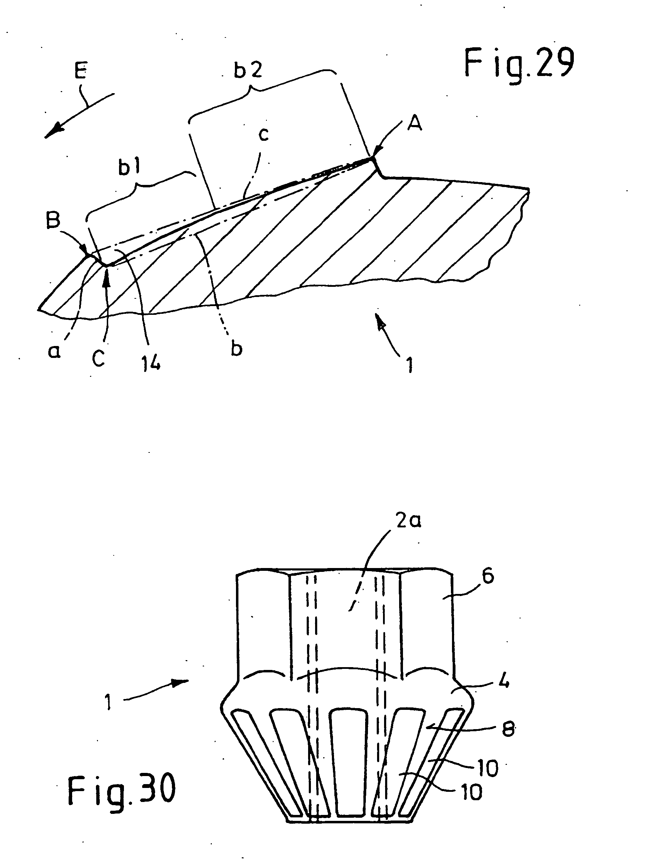

An dem in Fig. 29 dargestellten Detail einer achten Ausführungsform des erfindungsgemäßen Befestigungsmittels 1 wird ergänzend deutlich, daß der effektive Verlauf der großen Kathete b des Grund-Dreiecks ABC bedarfsweise zur Optimierung des Eindreh- und Löseverhaltens des erfindungsgemäßen Befestigungsmittels auch aus (mindestens) einem gekrümmten Abschnitt b1 und (mindestens) einem ebenen Abschnitt b2 gebildet bzw. zusammengesetzt sein kann.

Die in Fig. 30 dargestellte Ausführung der Erfindung unterscheidet sich von allen übrigen dadurch, daß das Befestigungsmittel 1 kein Schraubbolzen, sondern eine Mutter ist, wobei kein Schaft 2 vorhanden ist, sondern sich in dem Kopf 4 eine Gewindebohrung 2a befindet und wobei das mit dem Befestigungsmittel 1 verbindbare Bauteil 101 dann einen Gewindeschaft für die Gewindebohrung 2a aufweist. Die Gestaltung der Andruckfläche 8 mit den Abflachungen 10 und ebenso die Gestaltung der Anlagefläche 108 mit den Querschnittseinengungen 110 des (nicht dargestellten) Bauteils entspricht im Übrigen derjenigen der ersten Ausführung der Erfindung.

Wie bereits aus der vorstehenden Beschreibung hervorgeht, ist die Erfindung nicht auf die dargestellten Ausführungsbeispiele beschränkt, sondern umfaßt auch alle im Rahmen der Ansprüche gleichwirkenden Ausführungen. So wäre es in einer nicht dargestellten Alternative beispielsweise möglich, daß die Konturrücksprünge (Abflachungen 10, Ausnehmungen 14) etwa schraubenlinienförmig oder spiralförmig über die Andruckfläche 8 verlaufen, und zwar insbesondere in einer zur Lösedrehrichtung des Befestigungsmittels 1 entgegengesetzten Verlaufsrichtung. Darüber hinaus ist es möglich, daß sich die Konturrücksprünge in Verlaufsrichtung verbreitern oder verschmälern. Wenn - wie in der fünften Ausführungsform - Erhebungen 12 und korrespondierende Vertiefungen vorgesehen sind, so müssen diese nicht oder nicht ausschließlich im Bereich der Konturrücksprünge bzw. der Konturvorsprünge angeordnet sein, sondern können sich auch im Bereich der Andruckfläche 8 bzw. der Anlagefläche 108 befinden.

Des weiteren ist - wie bereits aus den einleitenden Bemerkungen hervorgeht - zu allen dargestellten Ausführungsbeispielen auch die jeweilige kinematische Umkehr möglich, d.h., daß das Befestigungsmittel 1 jeweils als Kontursprünge die Konturvorsprünge 110 und das Bauteil 101 jeweils als Gegenkontursprünge die komplementären Konturrrücksprünge 10, 14 und - falls vorhanden - das Befestigungsmittel 1 die Vertiefungen und das Bauteil 101 die Erhebungen 12 aufweisen kann.

### Bezugszeichen

- 1: Befestigungsmittel
- 2: Gewindeschaft von 1
- 2a: Gewindebohrung in 1
- 4: Kopf von 1
- 6: Kraftangriff an 4
- 8: Andruckfläche von 1
- 10: Abflachung (Kontursprung, Konturrücksprung)
- 12: Erhebung
- 14: Ausnehmung (Kontursprung, Konturrücksprung)
- 16: Fußpunkt von 14
- 18: Kopfpunkt von 14
- 101: Bauteil
- 102: Befestigungsloch von 101
- 108: Anlagefläche von 101
- 110: Querschnittseinengung (Kontursprung, Konturvorsprung)
- A: Eckpunkt von ABC
- B: Eckpunkt von ABC
- C: Eckpunkt von ABC
- ABC: Dreieck
- a: kleine Kathete von ABC
- b: große Kathete von ABC
- b1: gekrümmter Abschnitt von b
- b2: ebener Abschnitt von b
- c: Hypotenuse von ABC
- E: Eindrehrichtung von 1
- H: Höhe von 12
- L1: Breite von 8
- L2: Breite von 14
- R: Krümmungsradius von 8
- T: Tiefe von 14
- t: Tangente an 8
- α: Winkel zwischen b und t

## Patentansprüche

1. Befestigungsanordnung, umfassend einerseits ein Befestigungsmittel (1), das einen Kopf (4) mit einem Kraftangriff (6) für ein Drehwerkzeug und mit einer konisch oder kalottenartig gekrümmten Andruckfläche (8) aufweist, in deren Bereich mehrere über ihren Umfang verteilt angeordnete und ihre eigentliche Flächenkrümmung unterbrechende Kontursprünge (Konturrücksprünge 10, 14 oder Konturvorsprünge 110) gebildet sind, und umfassend andererseits ein mit dem Befestigungsmittel (1) verbindbares Bauteil (101), das eine konisch oder kalottenartig gekrümmte Anlagefläche (108) für die Andruckfläche (8) des Befestigungsmittels (1) aufweist,
**dadurch gekennzeichnet, daß** im Bereich der Anlagefläche (108) mehrere über ihren Umfang verteilt angeordnete und ihre eigentliche Flächenkrümmung unterbrechende Gegenkontursprünge (Konturvorsprünge 110 oder Konturrücksprünge 10, 14) gebildet sind, die im verbundenen Zustand von Befestigungsmittel (1) und Bauteil (101) formschlüssig in die Kontursprünge (10, 14, 110) der Andruckfläche (8) eingreifen, wobei die Andruckfläche (8) mit den Kontursprüngen (10, 14, 110) und die Anlagefläche (108) mit den Gegenkontursprüngen (110, 10, 14) derart dimensioniert sind, daß beim Verbinden von Befestigungsmittel (1) und Bauteil (101) keine bleibenden, makroskopischen Formänderungen auftreten.

2. Befestigungsanordnung nach Anspruch 1,
**dadurch gekennzeichnet, daß** die Kontursprünge (10, 14, 110) streifenförmig und im wesentlichen geradlinig in Richtung der Längsachse des Gewindeschaftes (2) über die Andruckfläche (8) verlaufen und daß die Gegenkontursprünge (110, 10, 14) streifenförmig und im wesentlichen geradlinig in Richtung der Längsachse des Befestigungsloches (102) über die Anlagefläche (108) verlaufen.

3. Befestigungsanordnung nach Anspruch 1,
**dadurch gekennzeichnet, daß** die Kontursprünge (10, 14, 110) streifenförmig und etwa schraubenlinienförmig oder spiralförmig über die Andruckfläche (8) verlaufen, und zwar insbesondere in zur Lösedrehrichtung entgegengesetzter Verlaufsrichtung (Eindrehrichtung E) und daß die Gegenkontursprünge (110, 10, 14) streifenförmig und etwa schraubenlinienförmig oder spiralförmig über die Anlagefläche (108) verlaufen.

4. Befestigungsanordnung nach einem der Ansprüche 1 bis 3,
**dadurch gekennzeichnet, daß** die Kontursprünge (10, 14, 110) und die Gegenkontursprünge (110, 10, 14) sich in ihrer Verlaufsrichtung jeweils verbreitern oder verschmälern.

5. Befestigungsanordnung nach einem der Ansprüche 1 bis 4,
**dadurch gekennzeichnet, daß** Kanten der Kontursprünge (10, 14, 110) und der Gegenkontursprünge (110, 10, 14) spitz ausgebildet sind.

6. Befestigungsanordnung nach einem der Ansprüche 1 bis 4,
**dadurch gekennzeichnet, daß** Kanten der Kontursprünge (10, 14, 110) und der Gegenkontursprünge (110, 10, 14) Abrundungen aufweisen.

7. Befestigungsanordnung nach einem der Ansprüche 1 bis 6,
**dadurch gekennzeichnet, daß** mindestens drei, insbesondere etwa vier bis sechzehn, Kontursprünge (10, 14, 110) und Gegenkontursprünge (110, 10, 14) vorgesehen sind.

8. Befestigungsanordnung nach einem der Ansprüche 1 bis 7,
**dadurch gekennzeichnet, daß** die Kontursprünge (10, 14, 110) durch Abflachungen (10) und die Gegenkonturvorsprünge (110, 10, 14) durch Aufwölbungen auf der Anlagefläche (108) oder Querschnittseinengungen (110) des Befestigungsloches (102) gebildet sind, oder umgekehrt.

9. Befestigungsanordnung nach Anspruch 8,
**dadurch gekennzeichnet, daß** jede Abflachung (10) und die korrespondierende Querschnittseinengung (110) im wesentlichen eben oder jede Abflachung (10) und die korrespondierende Aufwölbung schwach gekrümmt mit einem Krümmungsradius ausgebildet ist, der größer als der entsprechende Krümmungsradius (R) der Andruckfläche (8) bzw. der Anlagefläche (108) ist.

10. Befestigungsanordnung nach einem der Ansprüche 1 bis 7,
**dadurch gekennzeichnet, daß** die Kontursprünge (10, 14, 110) durch Ausnehmungen (14) gebildet sind, die eine in Eindrehrichtung (E) zunehmende Tiefe (T) aufweisen und daß die Gegenkontursprünge (110) durch Erhöhungen gebildet sind, die eine in Eindrehrichtung (E) zunehmende Höhe aufweisen, oder umgekehrt.

11. Befestigungsanordnung nach Anspruch 10,
**dadurch gekennzeichnet, daß** die Ausnehmungen (14) und Erhöhungen jeweils eine Grundkontur aufweisen, die im Querschnitt etwa die Form eines ungleichseitigen Dreiecks (ABC) besitzt, dessen große Kathete (b) in Eindrehrichtung (E) radial nach innen verläuft, vorzugsweise in einem Winkel (α) von bis zu etwa 30° zu einer Tangente (t) an die Andruckfläche (8), und dessen kleine Kathete (a) quer zur Eindrehrichtung (E) verläuft.

12. Befestigungsanordnung nach Anspruch 11,
**dadurch gekennzeichnet, daß** die große Kathete (b) im wesentlichen eben oder schwach gekrümmt ausgebildet ist und/oder aus ebenen Abschnitten (b2) und gekrümmten Abschnitten (b1) zusammengesetzt ist.

13. Befestigungsanordnung nach Anspruch 11 oder 12,
**dadurch gekennzeichnet, daß** die große Kathete (b) zur kleinen Kathete (a) in einem Längenverhältnis von etwa 3 : 1 bis zu etwa 8 : 1 steht.

14. Befestigungsanordnung nach einem der Ansprüche 1 bis 13,
**dadurch gekennzeichnet, daß** im Bereich der Andruckfläche (8) oder im Bereich der Kontursprünge (10, 14, 110) mindestens eine Erhebung (12) oder Vertiefung, vorzugsweise mehrere Erhebungen (12) oder Vertiefungen, angeordnet ist/sind und daß im Bereich der Anlagefläche (108) oder im Bereich der Gegenkontursprünge (110, 10, 14) mindestens eine komplementäre Vertiefung, oder Erhebung, vorzugsweise mehrere Vertiefungen oder Erhebungen, angeordnet ist/sind, wobei die Erhebungen (12) im verbundenen Zustand von Befestigungsmittel (1) und Bauteil (101) formschlüssig in die Vertiefungen eingreifen, und die Erhebungen (12) und Vertiefungen derart dimensioniert sind, daß beim Verbinden von Befestigungsmittel (1) und Bauteil (101) keine bleibenden Formänderungen auftreten.

15. Befestigungsanordnung nach Anspruch 14,
**dadurch gekennzeichnet, daß** die Erhebung (12) im Hautrelief und die Vertiefung im Basrelief jeweils etwa halbkugelförmig oder als Kugelkappe ausgebildet ist oder zumindest einen halbkreisförmigen oder kreisabschnittförmigen Querschnitt aufweist.

16. Befestigungsanordnung nach Anspruch 14,
**dadurch gekennzeichnet, daß** die Erhebung (12) jeweils als Rippe ausgebildet ist, die dem Grundverlauf der Kontursprünge (10, 14, 110) oder Gegenkontursprünge (110, 10, 14) folgt und daß die Vertiefung jeweils als Nut ausgebildet ist, die dem Grundverlauf der Gegenkontursprünge (110, 10, 14) oder der Kontursprünge (10, 14, 110) folgt.

17. Befestigungsanordnung nach einem der Ansprüche 14 bis 16,
**dadurch gekennzeichnet, daß** sich die Erhebung (12) jeweils als eine Anzahl von mehreren Teilerhebungen oder als Ganzes über die gesamte Länge der Kontursprünge (10, 14, 110) oder der Gegenkontursprünge (110, 10, 14) erstreckt und daß sich die Vertiefung jeweils als eine Anzahl von mehreren Teilvertiefungen oder als Ganzes über die gesamte Länge der Gegenkontursprünge (110, 10, 14) oder der Kontursprünge (10, 14, 110) erstreckt.

18. Befestigungsanordnung nach einem der Ansprüche 14 bis 16,
**dadurch gekennzeichnet, daß** sich die Erhebung (12) oder die Vertiefung jeweils als eine Anzahl von mehreren Teilerhebungen oder Teilvertiefungen oder als Ganzes über eine Teillänge der Konturrücksprünge (10, 14, 110), insbesondere über deren kopfseitige oder schaftseitige Hälfte, und daß sich die Vertiefung oder die Erhebung jeweils als eine Anzahl von mehreren Teilvertiefungen oder Teilerhebungen als Ganzes über eine Teillänge der Gegenkontursprünge (110, 10, 14), insbesondere über eine obere oder untere Hälfte, erstreckt.

19. Befestigungsanordnung nach einem der Ansprüche 14 bis 18,
**dadurch gekennzeichnet, daß** die Erhebung (12) zumindest bereichsweise den Krümmungsradius (R) der Andruckfläche (8) tangiert oder überragt und daß die Vertiefung zumindest bereichsweise den Krümmungsradius (R) der Anlagefläche (108) tangiert oder durchdringt.

20. Befestigungsanordnung nach einem der Ansprüche 14 bis 19,
**dadurch gekennzeichnet, daß** die Erhebung (12) und die Vertiefung über ihren jeweiligen Längsverlauf eine veränderliche Höhe (H) bzw. Tiefe aufweisen.

21. Befestigungsanordnung nach einem der Ansprüche 1 bis 20,
**dadurch gekennzeichnet, daß** eine maximale jeweilige Abmessung (Tiefe T oder Höhe) der Kontursprünge (10, 14, 110) gegenüber der Andruckfläche (8) und eine jeweilige maximale Gegenabmessung (Höhe oder Tiefe) der Gegenkontursprünge (110, 10, 14) gegenüber der Anlagefläche (108) sowie die jeweilige Höhe (H) gegebenenfalls vorhandener Erhebungen (12) und die jeweilige Tiefe gegebenenfalls vorhandener Vertiefungen zumindest unter Beachtung der jeweiligen, aus dem Druckversuch nach DIN 50 106 gewonnenen Quetschgrenzen R_{dF} der Werkstoffe des Befestigungsmittels (1) und des Bauteils (101), vorzugsweise aber unter Beachtung der jeweiligen 0,2%-Stauchgrenze R_{d0,2}, dimensioniert sind, wobei hinsichtlich dieser Kenngrößen der Werkstoffe von Befestigungsmittel (1) und Bauteil (101) der jeweils kleinere Wert zugrundegelegt ist.

22. Befestigungsanordnung nach einem der Ansprüche 1 bis 21,
**dadurch gekennzeichnet, daß** das Befestigungsmittel (1) ein Schraubbolzen ist, der einen Gewindeschaft (2) aufweist, an dessen einem Ende der Kopf (4) ausgebildet ist, wobei die konisch oder kalottenartig gekrümmte Andruckfläche (8) in einem Übergangsbereich des Kopfes (4) zu dem Gewindeschaft (2) hin angeordnet ist und wobei das mit dem Befestigungsmittel (1) verbindbare Bauteil ein Befestigungsloch (102) für den Gewindeschaft (2) aufweist.

23. Befestigungsanordnung nach einem der Ansprüche 1 bis 21,
**dadurch gekennzeichnet, daß** das Befestigungsmittel (1) eine Mutter ist, wobei sich in dem Kopf (4) eine Gewindebohrung (2a) befindet und wobei das mit dem Befestigungsmittel (1) verbindbare Bauteil (101) einen Gewindeschaft für die Gewindebohrung (2a) aufweist.

24. Befestigungsanordnung nach einem der Ansprüche 1 bis 23,
**dadurch gekennzeichnet, daß** das Befestigungsmittel (1) und/oder das Bauteil (101) mit einer antiadhäsiven, tribologisch wirksamen Beschichtung versehen sind/ist, welche insbesondere den Verschleiß durch eine Verminderung der Gefahr des Fressens herabsetzt.

25. Bauteil, wie eine Radfelge, einer Befestigungsanordnung, die einerseits ein Befestigungsmittel (1) umfaßt, das einen Kopf (4) mit einem Kraftangriff (6) für ein Drehwerkzeug und mit einer konisch oder kalottenartig gekrümmten Andruckfläche (8) aufweist, in deren Bereich mehrere über ihren Umfang verteilt angeordnete und ihre eigentliche Flächenkrümmung unterbrechende Kontursprünge (Konturrücksprünge 10, 14 oder Konturvorsprünge110) gebildet sind, und die andererseits das mit dem Befestigungsmittel (1) verbindbare Bauteil (101) umfaßt, das eine konisch oder kalottenartig gekrümmte Anlagefläche (108) für die Andruckfläche (8) des Befestigungsmittels (1) aufweist, wobei im Bereich der Anlagefläche (108) mehrere über ihren Umfang verteilt angeordnete und ihre eigentliche Flächenkrümmung unterbrechende Gegenkontursprünge (Konturvorsprünge 110 oder Konturrücksprünge 10, 14) gebildet sind, die dazu bestimmt sind, im verbundenen Zustand von Befestigungsmittel (1) und Bauteil (101) formschlüssig in die Kontursprünge (10, 14, 110) der Andruckfläche (8) einzugreifen, wobei die Andruckfläche (8) mit den Kontursprüngen (10, 14, 110) und die Anlagefläche (108) mit den Gegenkontursprüngen (110, 10, 14) derart dimensioniert sind, daß beim Verbinden von Befestigungsmittel (1) und Bauteil (101) keine bleibenden makroskopischen Formänderungen auftreten, und wobei die Anlagefläche (108) des Bauteils (101) komplemetär zur Andruckfläche (8) des Befestigungsmittels (1) ausgebildet ist.

## Claims

1. A fixing arrangement comprising, on the one hand, a fixing means (1), which has a head (4) with a force-application means (6) for a rotating tool and with a pressure face (8) which is curved in the manner of a cone or a dome and in the region of which there are formed a plurality of contour steps (contour recesses 10, 14 or contour projections 110) which are arranged distributed over its circumference and interrupt its actual surface curvature, and comprising, on the other hand, a component (101) which may be connected to the fixing means (1) and has a contact face (108) for the pressure face (8) of the fixing means (1), the contact face being curved in the manner of a cone or a dome,
**characterised in that**, formed in the region of the contact face (108), there are a plurality of counter contour steps (contour projections 110 or contour recesses 10, 14) which are arranged distributed over its circumference and interrupt its actual surface curvature and which, in the connected state of the fixing means (1) and the component (101), engage with form fit in the contour steps (10, 14, 110) of the pressure face (8), the pressure face (8) having the contour steps (10, 14, 110) and the contact face (108) having the counter contour steps (110, 10, 14) being dimensioned such that no lasting macroscopic changes in shape occur when connecting the fixing means (1) and component (101).

2. A fixing arrangement according to Claim 1,
**characterised in that** the contour steps (10, 14, 110) extend over the pressure face (8) in a strip-like manner and substantially linearly in the direction of the longitudinal axis of the threaded shaft (2), and **in that** the counter contour steps (110, 10, 14) extend over the contact face (108) in a strip-like manner and substantially linearly in the direction of the longitudinal axis of the fixing hole (102).

3. A fixing arrangement according to Claim 1,
**characterised in that** the contour steps (10, 14, 110) extend over the pressure face (8) in a strip-like manner and approximately helically or spirally, particularly in the direction of progression (screwing-in direction E) which is opposed to the unscrewing direction, and **in that** the counter contour steps (110, 10, 14) extend over the contact face (108) in a strip-like manner and approximately helically or spirally.

4. A fixing arrangement according to one of Claims 1 to 3, **characterised in that** the contour steps (10, 14, 110) and the counter contour steps (110, 10, 14) each become wider or narrower in their direction of progression.

5. A fixing arrangement according to one of Claims 1 to 4, **characterised in that** edges of the contour steps (10, 14, 110) and the counter contour steps (110, 10, 14) are of a pointed construction.

6. A fixing arrangement according to one of Claims 1 to 4, **characterised in that** edges of the contour steps (10, 14, 110) and the counter contour steps (110, 10, 14) have rounded portions.

7. A fixing arrangement according to one of Claims 1 to 6, **characterised in that** at least three, particularly approximately four to sixteen, contour steps (10, 14, 110) and counter contour steps (110, 10, 14) are provided.

8. A fixing arrangement according to one of Claims 1 to 7, **characterised in that** the contour steps (10, 14, 110) are formed by flattened portions (10) and the counter contour steps (110, 10, 14) are formed by bulges in the contact face (108) or cross-sectional constrictions (110) of the fixing hole (102), or vice versa.

9. A fixing arrangement according to Claim 8, **characterised in that** each flattened portion (10) and the corresponding cross-sectional constriction (110) is constructed such that it is substantially planar, or each flattened portion (10) and the corresponding bulge is constructed such that it is slightly curved with a radius of curvature which is greater than the corresponding radius of curvature (R) of the pressure face (8) or contact face (108).

10. A fixing arrangement according to one of Claims 1 to 7, **characterised in that** the contour steps (10, 14, 110) are formed by cutouts (14) which have a depth (T) increasing in the screwing-in direction (E) and **in that** the counter contour steps (110) are formed by elevated portions which have a height increasing in the screwing-in direction (E), or vice versa.

11. A fixing arrangement according to Claim 10, **characterised in that** the cutouts (14) and elevated portions each have a basic contour which, in cross-section, has the approximate shape of a scalene triangle (ABC) whereof the large cathetus (b) extends radially inwards to the pressure face (8) in the screwing-in direction (E), preferably at an angle (α) of up to approximately 30° to a tangent (t), and whereof the small cathetus (a) extends transversely to the screwing-in direction (E).

12. A fixing arrangement according to Claim 11, **characterised in that** the large cathetus (b) is constructed such that it is substantially planar or slightly curved and/or is composed of planar portions (b2) and curved portions (b1).

13. A fixing arrangement according to Claim 11 or 12, **characterised in that** the large cathetus (b) to small cathetus (a) length ratio is approximately 3:1 up to approximately 8:1.

14. A fixing arrangement according to one of Claims 1 to 13, **characterised in that** at least one raised portion (12) or depression, preferably a plurality of raised portions (12) or depressions, is/are arranged in the region of the pressure face (8) or in the region of the contour steps (10, 14, 110), and **in that** at least one complementary depression or raised portion, preferably a plurality of depressions or raised portions, is/are arranged in the region of the contact face (108) or in the region of the counter contour steps (110, 10, 14), the raised portions (12) engaging with form fit in the depressions in the connected state of the fixing means (1) and the component (101), and the raised portions (12) and depressions being dimensioned such that no lasting changes in shape occur when connecting the fixing means (1) and component (101).

15. A fixing arrangement according to Claim 14, **characterised in that** the raised portion (12) in surface relief and the depression in bas-relief are each constructed to be approximately semi-spherical or as a spherical cap or at least have a semi-circular cross-section or a cross-section in the form of a segment of a circle.

16. A fixing arrangement according to Claim 14, **characterised in that** the raised portion (12) is constructed in each case as a rib which follows the basic progression of the contour steps (10, 14, 110) or counter contour steps (110, 10, 14) and **in that** the depression is constructed in each case as a groove which follows the basic progression of the counter contour steps (110, 10, 14) or contour steps (10, 14, 110).

17. A fixing arrangement according to one of Claims 14 to 16, **characterised in that** the raised portion (12) extends in each case as a number of a plurality of partial raised portions or as a whole over the entire length of the contour steps (10, 14, 110) or counter contour steps (110, 10, 14) and **in that** the depression extends in each case as a number of a plurality of partial depressions or as a whole over the entire length of the counter contour steps (110, 10, 14) or contour steps (10, 14, 110).

18. A fixing arrangement according to one of Claims 14 to 16, **characterised in that** the raised portion (12) or the depression extends in each case as a number of a plurality of partial raised portions or partial depressions or as a whole over part of the length of the contour recesses (10, 14, 110), particularly over the head-side or shaft-side half thereof, and **in that** the depression or the raised portion extends in each case as a number of a plurality of partial depressions or partial raised portions as a whole over part of the length of the counter contour steps (110, 10, 14), particularly over an upper or lower half.

19. A fixing arrangement according to one of Claims 14 to 18, **characterised in that** at least part of the raised portion (12) is tangent to, or projects over, the radius of curvature (R) of the pressure face (8) and **in that** at least part of the depression is tangent to, or penetrates, the radius of curvature (R) of the contact face (108).

20. A fixing arrangement according to one of Claims 14 to 19, **characterised in that** the raised portion (12) and the depression have, over their respective longitudinal progression, a changing height (H) or depth.

21. A fixing arrangement according to one of Claims 1 to 20, **characterised in that** a maximum respective measurement (depth T or height) of the contour steps (10, 14, 110) with respect to the pressure face (8) and a respective maximum counter measurement (height or depth) of the counter contour steps (110, 10, 14) with respect to the contact face (108) and also the respective height (H) of raised portions (12) which may be present and the respective depth of depressions which may be present are dimensioned such that they at least take into account the respective crushing yield points R_{dF} of the materials of the fixing means (1) and the component (101), the crushing yield points being obtained from the pressure test according to DIN 50, and are preferably dimensioned such that they take into account the respective 0.2% buckling point R_{d0.2}, the smaller value in each case being used as a basis with regard to these characteristics of the materials of the fixing means (1) and component (101).

22. A fixing arrangement according to one of Claims 1 to 21, **characterised in that** the fixing means (1) is a screw bolt which has a threaded shaft (2) on the one end of which the head (4) is constructed, the pressure face (8), which is curved in the manner of a cone or a dome, being arranged in a transition region from the head (4) to the threaded shaft (2) and the component which may be connected to the fixing means (1) having a fixing hole (102) for the threaded shaft (2).

23. A fixing arrangement according to one of Claims 1 to 21, **characterised in that** the fixing means (1) is a nut, a threaded bore (2a) being located in the head (4) and the component (101) which may be connected to the fixing means (1) having a threaded shaft for the threaded bore (2a).

24. A fixing arrangement according to one of Claims 1 to 23, **characterised in that** the fixing means (1) and/or the component (101) is/are provided with an anti-adhesive tribologically acting coating, which particularly reduces the wear by lowering the risk of scuffing.

25. A component, such as a wheel rim, of a fixing arrangement, which comprises, on the one hand, a fixing means (1) which has a head (4) with a force-application means (6) for a rotating tool and with a pressure face (8) which is curved in the manner of a cone or a dome and in the region of which there are formed a plurality of contour steps (contour recesses 10, 14 or contour projections 110), which are arranged distributed over its circumference and interrupt its actual surface curvature, and which comprises, on the other hand, the component (101) which may be connected to the fixing means (1) and has a contact face (108) for the pressure face (8) of the fixing means (1), the contact face being curved in the manner of a cone or a dome, there being formed in the region of the contact face (108) a plurality of counter contour steps (contour projections 110 or contour recesses 10, 14) which are arranged distributed over its circumference and interrupt its actual surface curvature and which, in the connected state of the fixing means (10) and the component (101), are intended to engage with form fit in the contour steps (10, 14, 110) of the pressure face (8), the pressure face (8) having the contour steps (10, 14, 110) and the contact face (108) having the counter contour steps (110, 10, 14) being dimensioned such that no lasting macroscopic changes in shape occur when connecting the fixing means (1) and component (101), and the contact face (108) of the component (101) being constructed complementarily to the pressure face (8) of the fixing means (1).

## Revendications

1. Dispositif de fixation, comprenant d'une part un moyen de fixation (1), qui présente une tête (4) avec un entraînement de force (6) pour un outil de tournage et avec une surface de pression (8) incurvée en forme de cône ou de calotte, dans la zone de laquelle sont formés plusieurs sauts de contour (retraits de contour 10, 14 ou saillies de contour 110) disposés et répartis sur son pourtour et interrompant sa courbure de surface proprement dite, et comprenant d'autre part un composant (101) pouvant être relié au moyen de fixation (1), qui présente une surface d'appui (108) incurvée en forme de cône ou de calotte pour la surface d'appui (8) du moyen de fixation (1),
**caractérisé en ce que** dans la zone de la surface d'appui (108) sont formés plusieurs autres sauts de contre-contour (saillies de contour 110 ou retraits de contour 10, 14) disposés et répartis sur son pourtour et interrompant sa courbure de surface proprement dite, qui s'engagent par complémentarité de forme dans les sauts de contour (10, 14, 110) de la surface de pression (8) lorsque le moyen de fixation (1) et le composant (101) sont reliés, la surface de pression (8) avec les sauts de contour (10, 14, 110) et la surface d'appui (108) avec les sauts de contre-contour (110, 10, 14) étant dimensionnés de telle sorte que, lorsque le moyen de fixation (1) et le composant (101) sont reliés, il n'apparaît pas de déformations macroscopiques permanentes.

2. Dispositif de fixation selon la revendication 1, **caractérisé en ce que** les sauts de contour (10, 14, 110) sont agencés en forme de bande et sensiblement rectilignes en direction de l'axe longitudinal de la tige filetée (2) sur la surface de pression (8) et **en ce que** les sauts de contre-contour (110, 10, 14) sont agencés en forme de bande et sensiblement rectilignes en direction de l'axe longitudinal du trou de fixation (102) sur la surface d'appui (108).

3. Dispositif de fixation selon la revendication 1,
**caractérisé en ce que** les sauts de contour (10, 14, 110) sont agencés en forme de bande et à peu près en forme d'hélice ou de spirale sur la surface de pression (8), et ce en particulier dans le sens de tracé (sens de vissage E) opposé au sens de desserrage et **en ce que** les sauts de contre-contour (110, 10, 14) sont agencés en forme de bande et à peu près en forme d'hélice ou de spirale sur la surface d'appui (108).

4. Dispositif de fixation selon l'une quelconque des revendications 1 à 3,
**caractérisé en ce que** les sauts de contre-contour (10, 14, 110) et les saillies de contre-contour (110, 10, 14) s'élargissent ou se rétrécissent à chaque fois dans leur sens de tracé.

5. Dispositif de fixation selon l'une quelconque des revendications 1 à 4,
**caractérisé en ce que** des bords des sauts de contour (10, 14, 110) et des sauts de contre-contour (110, 10, 14) sont conçus en pointe.

6. Dispositif de fixation selon l'une quelconque des revendications 1 à 4,
**caractérisé en ce que** des bords des sauts de contour (10, 14, 110) et des sauts de contre-contour (110, 10, 14) présentent des parties arrondies.

7. Dispositif de fixation selon l'une quelconque des revendications 1 à 6,
**caractérisé en ce qu'**au moins trois, en particulier environ quatre jusqu'à seize sauts de contour (10, 14, 110) et sauts de contre-contour (110, 10, 14) sont prévus.

8. Dispositif de fixation selon l'une quelconque des revendications 1 à 7,
**caractérisé en ce que** les sauts de contour (10, 14, 110) sont formés par des parties aplaties (10) et les sauts de contre-contour (110, 10, 14) par des parties bombées sur la surface d'appui (108) ou des rétrécissements de section (110) du trou de fixation (102), ou inversement.

9. Dispositif de fixation selon la revendication 8,
**caractérisé en ce que** chaque partie aplatie (10) et le rétrécissement de section (110) correspondant est sensiblement plat ou chaque partie aplatie (10) et la partie bombée correspondante est conçue faiblement incurvée avec un rayon de courbure qui est supérieur au rayon de courbure (R) correspondant de la surface de pression (8) ou de la surface d'appui (108).

10. Dispositif de fixation selon l'une quelconque des revendications 1 à 7,
**caractérisé en ce que** les sauts de contour (10, 14, 110) sont formés par des évidements (14), qui présentent une profondeur (T) augmentant dans le sens de vissage (E) et **en ce que** les sauts de contre-contour (110) sont formés par des élévations qui présentent une hauteur croissante dans le sens de vissage (E) ou inversement.

11. Dispositif de fixation selon la revendication 10,
**caractérisé en ce que** les évidements (14) et élévations présentent respectivement un contour de base, qui a en section à peu près la forme d'un triangle scalène (ABC), dont le grand côté de l'angle droit (b) est disposé dans le sens de vissage (E) radialement vers l'intérieur, de préférence en formant un angle (α) allant jusqu'à environ 30° par rapport à une tangente (t) à la surface de pression (8), et dont le petit côté d'angle droit (a) est disposé transversalement au sens de vissage (E).

12. Dispositif de fixation selon la revendication 11,
**caractérisé en ce que** le grand côté de l'angle droit (b) est sensiblement plat ou faiblement incurvé et/ou est composé de parties (b2) planes et de parties (b1) incurvées.

13. Dispositif de fixation selon la revendication 11 ou 12,
**caractérisé en ce que** le grand côté de l'angle droit (b) par rapport au petit côté (a) se situe dans un rapport de longueurs d'environ 3:1 jusqu'à 8:1.

14. Dispositif de fixation selon l'une quelconque des revendications 1 à 13,
**caractérisé en ce qu'**au moins une élévation (12) ou une cavité, de préférence plusieurs élévations (12) ou cavités, est/sont disposé(es) dans la zone de la surface de pression (8) ou dans la zone des sauts de contour (10, 14, 110) et **en ce qu'**au moins une cavité complémentaire, ou une élévation, de préférence plusieurs cavités ou élévations est/sont disposé(es) dans la zone de la surface d'appui (108) ou dans la zone des sauts de contre-contour (110, 10, 14), les élévations (12) s'engageant par complémentarité de forme dans les cavités lorsque le moyen de fixation (1) et le composant (101) sont reliés, et les élévations (12) et cavités sont dimensionnées de telle sorte qu'il n'apparaît pas de déformations permanentes lors de la liaison du moyen de fixation (1) et du composant (101).

15. Dispositif de fixation selon la revendication 14,
**caractérisé en ce que** l'élévation (12) dans le haut-relief et la cavité dans le bas-relief sont conçues chacune à peu près en forme de demi-sphère ou de calotte sphérique ou présentent au moins une section en forme de demi-sphère ou de segment de cercle.

16. Dispositif de fixation selon la revendication 14,
**caractérisé en ce que** l'élévation (12) est conçue respectivement comme une nervure, qui suit le tracé de base des sauts de contour (10, 14, 110) ou sauts de contre-contour (110, 10, 14) et **en ce que** la cavité est conçue respectivement comme une rainure qui suit le tracé de base des sauts de contre-contour (110, 10, 14) ou des sauts de contour (10, 14, 110).

17. Dispositif de fixation selon l'une quelconque des revendications 14 à 16,
**caractérisé en ce que** l'élévation (12) s'étend respectivement sous la forme d'un certain nombre de plusieurs élévations partielles ou de façon globale sur l'ensemble de la longueur des sauts de contour (10, 14, 110) ou des sauts de contre-contour (110, 10, 14) et **en ce que** la cavité s'étend respectivement sous la forme d'un certain nombre de plusieurs cavités partielles ou de façon globale sur l'ensemble de la longueur des sauts de contre-contour (110, 10, 14) ou des sauts de contour (10, 14, 110).

18. Dispositif de fixation selon l'une quelconque des revendications 14 à 16,
**caractérisé en ce que** l'élévation (12) ou la cavité s'étend respectivement sous la forme d'un certain nombre de plusieurs élévations partielles ou cavités partielles ou de façon globale sur une longueur partielle des retraits de contour (10, 14, 110), en particulier sur leur moitié côté sommet ou leur côté côté tige et **en ce que** la cavité ou l'élévation s'étend respectivement sous la forme d'un certain nombre de plusieurs cavités partielles ou élévations partielles de façon globale sur une longueur partielle des sauts de contre-contour (110, 14, 10), en particulier sur une moitié supérieure ou une moitié inférieure.

19. Dispositif de fixation selon l'une quelconque des revendications 14 à 18,
**caractérisé en ce que** l'élévation (12) est tangente au moins par endroits au rayon de courbure (R) de la surface de pression (8) ou dépasse de celui-ci **en ce que** la cavité est tangente au moins par endroits au rayon de courbure (R) de la surface d'appui (108) ou pénètre celui-ci.

20. Dispositif de fixation selon l'une quelconque des revendications 14 à 19,
**caractérisé en ce que** l'élévation (12) et la cavité présentent une hauteur (H) ou une profondeur variable sur leur tracé longitudinal respectif.

21. Dispositif de fixation selon l'une quelconque des revendications 1 à 20,
**caractérisé en ce qu'**une dimension (profondeur T ou hauteur) respective maximale des sauts de contour (10, 14, 110) par rapport à la surface de pression (8) et une contre dimension (hauteur ou profondeur) maximale respective des sauts de contre-contour (110, 10, 14) par rapport à la surface d'appui (108) et la hauteur respective (H) d'élévations (12) éventuellement présentes et la profondeur respective de cavités éventuellement présentes sont dimensionnées au moyen en tenant compte des limites d'écrasement R_{dF}, respectives et obtenues par l'essai de pression selon DIN 50 106, des matériaux du moyen de fixation (1) et du composant (101), mais de préférence en tenant compte de la limite de refoulement à 0,2 % R_{d0,2} respective, la valeur respectivement la plus petite étant prise pour base en ce qui concerne ces paramètres des matériaux du moyen de fixation (1) et du composant (101).

22. Dispositif de fixation selon l'une quelconque des revendications 1 à 21,
**caractérisé en ce que** le moyen de fixation (1) est un boulon fileté qui présente une tige filetée (2), sur une extrémité de laquelle est réalisée la tête (4), la surface de pression (8) incurvée en forme de cône ou de calotte étant disposée dans une zone de transition de la tête (4) en direction de la tige filetée (2) et le composant pouvant être relié au moyen de fixation (1) présentant un trou de fixation (102) pour la tige filetée (2).

23. Dispositif de fixation selon l'une quelconque des revendications 1 à 21,
**caractérisé en ce que** le moyen de fixation (1) est un écrou, un alésage fileté (2a) se trouvant dans la tête (4) et le composant (101) pouvant être lié au moyen de fixation (1) présentant une tige filetée pour l'alésage fileté (2a).

24. Dispositif de fixation selon l'une quelconque des revendications 1 à 23,
**caractérisé en ce que** le moyen de fixation (1) et/ou le composant (101) est/sont pourvu(s) d'un revêtement anti-adhésif et à effet tribologique, qui diminue en particulier l'usure grâce à une réduction du risque de grippage.

25. Composant, comme une jante de roue, d'un dispositif de fixation, qui comprend d'une part un moyen de fixation (1), lequel présente une tête (4) avec un entraînement de force (6) pour un outil de serrage et avec une surface de pression (8) incurvée en forme de cône ou de calotte, dans la zone de laquelle sont formés plusieurs sauts de contour (retraits de contour 10, 14 ou saillies de contour 110) disposés et répartis sur son pourtour et interrompant sa courbure de surface proprement dite, et qui comprend d'autre part le composant (101) pouvant être relié au moyen de fixation (1), qui présente une surface d'appui (108), incurvée en forme de cône ou de calotte, pour la surface de pression (8) du moyen de fixation (1), plusieurs sauts de contre-contour (saillies de contour 110 ou retraits de contour 10, 14) étant formés dans la zone de la surface d'appui (108), disposés et répartis sur son pourtour et interrompant sa courbure de surface proprement dite, lesquels sauts sont destinés à s'engager par complémentarité de forme dans les sauts de contour (10, 14, 110) de la surface de pression (8) lorsque le moyen de fixation (1) et le composant (101) sont reliés, la surface de pression (8) avec les sauts de contour (10, 14, 110) et la surface d'appui (108) avec les sauts de contre-contour (110, 10, 14) étant dimensionnées de telle sorte que, lorsque le moyen de fixation (1) et le composant (101) sont reliés, il n'apparaît pas de déformations macroscopiques permanentes, et la surface d'appui (108) du composant (101) étant conçue de façon complémentaire par rapport à la surface de pression (8) du moyen de fixation (1).
